(19) Europäisches Patentamt
European Patent Office
Office européen des brevets

(11) **EP 2 393 233 B1**

(12) **FASCICULE DE BREVET EUROPEEN**

(45) Date de publication et mention
de la délivrance du brevet:
**23.01.2013 Bulletin 2013/04**

(51) Int Cl.:
*H04L 5/00* *(2006.01)*      *H04W 72/12* *(2009.01)*
*H04W 72/04* *(2009.01)*

(21) Numéro de dépôt: **11168370.2**

(22) Date de dépôt: **01.06.2011**

(54) **Méthode d'ordonnancement à économie d'énergie**

Energiesparendes Zuteilungsverfahren

Energy saving method of scheduling

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **04.06.2010 FR 1054416**

(43) Date de publication de la demande:
**07.12.2011 Bulletin 2011/49**

(73) Titulaire: **Commissariat à l'Énergie Atomique
et aux Énergies Alternatives
75015 Paris (FR)**

(72) Inventeur: **Calvanese Strinati, Emilio
38000 GRENOBLE (FR)**

(74) Mandataire: **Augarde, Eric et al
Brevalex
56, boulevard de l'Embouchure, Bât. B
B.P. 27519
F-31075 Toulouse Cedex 2 (FR)**

(56) Documents cités:
**EP-A1- 2 148 478    WO-A2-2005/015769**

• **GUOWANG MIAO ET AL: "Energy Efficient
Design in Wireless OFDMA",
COMMUNICATIONS, 2008. ICC '08. IEEE
INTERNATIONAL CONFERENCE ON, IEEE,
PISCATAWAY, NJ, USA, 19 mai 2008
(2008-05-19), pages 3307-3312, XP031265943,
ISBN: 978-1-4244-2075-9**
• **LOUAY M A JALLOUL ET AL: "Coverage Analysis
for IEEE 802.16e/WiMAX Systems", IEEE
TRANSACTIONS ON WIRELESS
COMMUNICATIONS, IEEE SERVICE CENTER,
PISCATAWAY, NJ, US, vol. 7, no. 11, 1 novembre
2008 (2008-11-01), pages 4627-4634,
XP011238930, ISSN: 1536-1276, DOI: DOI:
10.1109/T-WC.2008.070665**

**Description**

**DOMAINE TECHNIQUE**

La présente invention concerne de manière générale les systèmes de communication de type multi-utilisateur. Elle peut notamment s'appliquer dans les systèmes de type OFDMA (*Orthogonal Frequency Division Multiple Access*) par exemple dans les systèmes WiMAX ou 3GPP/LTE.

**ÉTAT DE LA TECHNIQUE ANTÉRIEURE**

Les systèmes de communication sans fil doivent généralement partager les ressources de transmission (fréquences de transmission, codes orthogonaux, intervalles de sous-porteuses au sein d'un multiplex OFDM) entre les différents utilisateurs de manière à leur garantir un accès au réseau.

Le procédé consistant à allouer, à chaque intervalle de transmission, une ressource de transmission à un utilisateur est dénommé « ordonnancement » (*scheduling*). On trouve également dans la littérature les expressions de *packet scheduling* (les données des utilisateurs étant transmises par paquets) ou de *priority scheduling.* Dans tous les cas, l'homme du métier comprend qu'il s'agit, pour chaque intervalle, d'affecter aux différents utilisateurs (ou plus généralement aux différents flux ou files d'attente) des ressources de transmission, en respectant, le cas échéant, certaines règles de priorité ou d'équité. L'ordonnancement se distingue ainsi de la simple allocation de ressources au sens où elle gère l'accès des utilisateurs à ces ressources.

De manière générale, la méthode d'ordonnancement tire parti de la diversité fréquentielle et/ou temporelle et/ou spatiale pour satisfaire au mieux certains critères tels que le débit total pour les différents utilisateurs (*total sum throughput*), l'équité entre utilisateurs, les qualités de service (QoS) requises, etc.

Plusieurs méthodes d'ordonnancement sont connues de l'état de la technique, notamment pour des liaisons descendantes (*downlink*) de systèmes de télécommunication OFDMA (*Orthogonal Frequency Division Multiple Access*), par exemple le système « 3GPP UTRAN long-term évolution » encore dénommé 3GPP/LTE.

La méthode d'ordonnancement dite MCI ou Max C/I (*Maximum Channel to Interference ratio*) vise à maximiser le débit instantané du système, pris sur l'ensemble des utilisateurs. Par exemple si l'on note $RB_1, RB_2,...,RB_N$ les ressources de transmission du système et, pour chaque ressource $RB_n$, $\eta_n^k$ le rapport signal sur bruit de la liaison de l'utilisateur $k$ sur la ressource $RB_n$, la méthode d'ordonnance attribue la ressource $RB_n$ à l'utilisateur qui peut en tirer le meilleur profit, autrement dit à l'utilisateur $k_m^{MCI}$, tel que :

$$k_m^{MCI} = \arg\max_k(\eta_n^k) \qquad (1)$$

On notera que cette méthode d'ordonnancement ne tient pas compte des niveaux de qualité de service (QoS) requis pour les différents utilisateurs.

On trouvera une description de la méthode d'ordonnancement MCI par exemple dans l'article d'A. Pokhariyal et al. intitulé « Performance of downlink frequency domain packet scheduling for the UTRAN long term évolution », publié dans Proc. of IEEE International Symposium on PIRMC, Sept. 2006.

La méthode d'ordonnancement dite PF (*Proportional Fair*) vise à maximiser le débit des différents utilisateurs par rapport à leurs conditions moyennes de transmission. Plus précisément, en gardant les mêmes notations que précédemment, la ressource $RB_n$ est attribuée à l'utilisateur $k_m^{PF}$, tel que :

$$k_m^{PF} = \arg\max\left(\frac{\eta_n^k}{\overline{\eta}_n^k}\right) \qquad (2)$$

où $\overset{-k}{\eta_n}$ est la valeur moyenne du rapport signal sur bruit $\eta_n^k$ pendant une fenêtre d'observation.

La méthode d'ordonnancement PF est efficace pour un niveau de qualité de service de type *Best Effort* mais se prête mal à la gestion de trafics de type temps réel, car la durée de la fenêtre d'observation est sensiblement plus longue que la durée de vie des paquets.

A l'inverse la méthode d'ordonnancement dite EDF (*Earliest Deadline First*) est conçue pour donner la priorité aux utilisateurs soumis à des contraintes de type temps réel. Plus précisément, les durées de vie restantes ou TTL (*Time To Live*) des paquets associés aux différents utilisateurs sont classées et les paquets les plus urgents (ayant la plus faible valeur de TTL) se voient attribuer les ressources offrant la meilleure qualité de liaison. On s'assure ainsi que les paquets de type temps réel soient acheminés selon leur degré d'urgence.

La méthode d'ordonnancement dite MLWDF (*Modified Largest Weighted Deadline First*) a été proposée pour tenir compte de la coexistence, au sein d'un même système, d'un trafic temps réel (trafic RT) et d'un trafic non temps réel (trafic NRT). L'objectif de cette méthode est de maintenir stable la taille des files d'attente des paquets à destination des différents utilisateurs (*thoughput optimal*). Plus précisément, pour chaque intervalle de temps de transmission $t$, la file d'attente de paquet à destination de l'utilisateur :

$$k_m^{MLWDF} = \underset{k}{\arg\max}\left(\gamma_k W_k(t) r_k(t)\right) \qquad (3)$$

est servie, où $W_k(t)$ est le retard du paquet affectant la tête de la file d'attente pour l'utilisateur $k$, $r_k$ est la capacité de la liaison de l'utilisateur $k$ et $\gamma_k$ est un coefficient de pondération. Un choix judicieux des coefficients de pondération $\gamma_k$ permet de maintenir le retard affectant les paquets de chaque utilisateur inférieur à une valeur de seuil prédéterminée, fonction de la qualité de service requise. Toutefois, le choix des coefficients de pondération est assez délicat et peut affecter de manière sensible les performances du système.

On trouvera une description de la méthode d'ordonnancement MLWDF dans l'article de M. Andrews et al. intitulé « Providing quality of service over a shared wireless link » publié dans IEEE Communications Magazine, Feb. 2001, pp. 150-154.

Par ailleurs, la réduction de la consommation d'énergie de transmission est nécessaire pour prolonger l'autonomie des téléphones mobiles. Il a été notamment proposé de réduire cette consommation d'énergie au moyen d'une méthode d'allocation de ressources et d'une adaptation des liaisons montantes, comme décrit dans l'article de G. Miao et al. intitulé « Energy efficient design in Wireless OFDMA » publié dans Proc. IEEE 2008 International Conference on Comm., May 2008. Cette méthode ne prend toutefois pas en compte les contraintes de trafic temps réel au sein du système. Cette préoccupation de réduction de l'énergie de transmission s'étend désormais aux liaisons descendantes.

Il est fait référence au document EP2148478 qui divulgue une méthode d'ordonnancement dans un système de communication multi-utilisateur comprenant les étapes suivantes:

on attribue à chaque paquet d'un utilisateur une ressource de transmission parmi une pluralité de ressources de transmission pendant un intervalle de temps de transmission;
on classe les paquets des différents utilisateurs entre paquets urgents et paquets non urgents ;
on attribue aux paquets urgents les ressources de transmission permettant d'obtenir les meilleures qualités de liaison en donnant la préférence aux paquets les plus urgents;
on attribue aux paquets non urgents les ressources restantes ;
on transmet chaque paquet non-urgent au moyen de la ressource ainsi attribuée.

Le problème à la base de l'invention est par conséquent de proposer une méthode d'ordonnancement de ressources de transmission qui permette de réduire la consommation d'énergie dans un système de communication multi-utilisateur tout en prenant en compte les contraintes de trafic temps réel.

## EXPOSÉ DE L'INVENTION

La présente invention est définie par une méthode d'ordonnancement dans un système de communication multi-utilisateur, ladite méthode attribuant à chaque paquet d'un utilisateur une ressource de transmission parmi une pluralité de ressources de transmission pendant un intervalle de temps de transmission. Selon cette méthode :

(a) on classe les paquets des différents utilisateurs entre paquets urgents et paquets non urgents ;

(b) on attribue aux paquets urgents les ressources de transmission permettant d'obtenir les meilleures qualités de liaison en donnant la préférence aux paquets les plus urgents ;

(c) on attribue aux paquets non urgents les ressources restantes ;

(d) on transmet chaque paquet non-urgent au moyen de la ressource ainsi attribuée et avec une puissance de transmission inférieure à celle qui serait nécessaire pour le transmettre avec une efficacité spectrale maximale, compte tenu de la qualité de service requise sur la liaison.

Avantageusement, à l'étape (b), on attribue aux paquets urgents les ressources de transmission offrant les qualités de liaison les plus élevées, un paquet se voyant attribuer une ressource de transmission offrant une qualité de liaison d'autant plus élevée qu'il est urgent.

De préférence, à l'étape (c), on attribue à chaque paquet non urgent la ressource de transmission restante permettant d'obtenir la qualité de liaison la plus élevée.

Selon un premier mode de réalisation, pour chaque paquet non urgent, on détermine le schéma de modulation et de codage $(MCS_{n,k}^{\max})$ de plus grande efficacité spectrale $(\lambda_{n,k}^{\max})$ et la puissance d'émission $(P_{n,k}^{\max})$ permettant d'obtenir une qualité de service requise $(QoS_k)$ sur la liaison utilisant la ressource de transmission $(RB_n)$ attribuée au paquet, on vérifie si cette efficacité spectrale $(\lambda_{n,k}^{\max})$ est supérieure à celle $(\lambda_{low\text{-}power})$ d'un schéma de modulation et de codage robuste prédéterminé et, dans l'affirmative, on utilise à l'étape (d) ce schéma pour transmettre ledit paquet non urgent avec une puissance d'émission inférieure à celle précédemment déterminée.

Typiquement, si un paquet appartient à un flux de type temps réel, il est classé comme urgent si sa durée de vie restante est inférieure à un seuil prédéterminé et comme non urgent dans le cas contraire.

Dans le cas d'un système de type HARQ, si un paquet appartient à un flux de type temps réel, il est classé comme urgent si sa durée de vie restante est inférieure à un seuil prédéterminé diminué d'une marge temporelle fonction du nombre maximum de retransmissions du paquet et comme non urgent dans le cas contraire.

Ledit seuil peut être déterminé par la procédure d'admission des utilisateurs dans ledit système.

Si un paquet appartient à un flux de type non temps réel, il est classé comme urgent si le flux auquel il appartient n'a pas été servi jusqu'alors à la hauteur de la qualité de service requise par ce flux.

En particulier, un paquet $k$ appartenant à un flux $i$ pourra être considéré comme urgent au temps $t_i$ si $(TW_i\text{-}t_i)$ $\leq(QoS_i\text{-}q_i)/R_{\min}$ où $TW_i$ est la durée d'une fenêtre d'observation, $t_i$ est le temps écoulé depuis le début de cette fenêtre, $QoS_i$ est la qualité de service requise par le flux $i$, libellée en termes de quantité de données à transmettre pendant ladite fenêtre d'observation, $q_i$ est la quantité de données effectivement transmises depuis le début de la fenêtre d'observation et $R_{\min}$ est le débit minimum sur la liaison.

Selon un second mode de réalisation, à l'étape (c) :

- on attribue une ressource de transmission restante au paquet pour lequel il est possible d'obtenir une économie maximale de puissance, à la qualité de service requise, entre un premier schéma de modulation et de codage et un second schéma de modulation et de codage, ledit premier schéma $(MCS_{k,n}^{\max})$ présentant une efficacité spectrale maximale parmi une pluralité de schémas possibles, ledit second schéma $(MCS_{k,n}^{\min})$ présentant une efficacité spectrale minimale parmi la même pluralité ;
- on utilise le second schéma pour transmettre ledit paquet avec une puissance réduite permettant d'obtenir ladite qualité de service requise.

## BRÈVE DESCRIPTION DES DESSINS

D'autres caractéristiques et avantages de l'invention apparaîtront à la lecture d'un mode de réalisation préférentiel de l'invention fait en référence aux figures jointes parmi lesquelles :

La Fig. 1 représente de manière schématique une méthode d'ordonnancement selon un premier mode de réalisation de l'invention ;

La Fig. 2 représente une matrice de qualité de liaison utilisée par la méthode d'ordonnancement de la Fig.1 ;

La Fig. 3 représente, pour une liaison donnée, le taux d'erreur paquet en fonction du rapport signal sur bruit et ce pour une pluralité de schémas de modulation et de codage MCS ;

La Fig. 4 représente de manière schématique une méthode d'ordonnancement selon un second mode de réalisation de l'invention ;

La Fig. 5 représente de manière schématique une méthode d'ordonnancement selon un mode plus général de réalisation de l'invention.

## EXPOSÉ DÉTAILLÉ DE MODES DE RÉALISATION PARTICULIERS

Nous considérerons dans la suite un système de communication sans fil de type multi-utilisateur, comprenant une station de base et une pluralité d'équipements mobiles, UEs (*User Equipments*). Dans un but de simple illustration et sans perte de généralité, nous supposerons que le système de communication est de type OFDMA et que les ressources à allouer aux différents utilisateurs pendant un intervalle de transmission ou TTI (*Time Transmission Interval),* sont des intervalles de sous-porteuses d'un multiplex OFDM (*chunks*).

Nous nous placerons dans l'hypothèse d'une liaison descendante (*downlink*), la méthode d'ordonnancement étant alors mise en oeuvre au niveau de la station de base (node B) et déterminant pour chaque paquet à destination d'un utilisateur la ressource de transmission (*chunk*) à lui allouer.

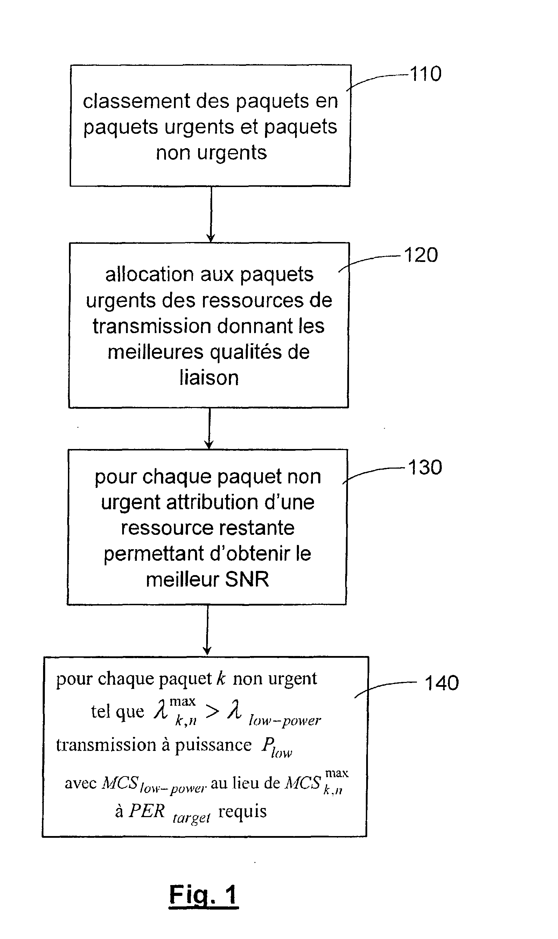

La méthode d'ordonnancement selon un premier mode de réalisation est schématiquement représentée en Fig. 1.

Le trafic des utilisateurs peut être de type temps réel (RT), par exemple de la voix sur IP (VoIP: *Voice over IP*) , des flux vidéo en quasi temps réel (NRTV : *Near Real Time Video*), ou bien non temps réel, par exemple de l'acheminement de données. Dans le cas général, on aura un trafic mixte avec des flux de paquets de type temps réel (RT) et d'autres non temps réel (NRT).

Dans une première étape 110, on procède à un tri des paquets urgents et des paquets non urgents.

On distingue d'abord les flux de paquets de type temps réel (RT) et non temps réel (NRT).

Lorsqu'un paquet appartient à un flux RT, on détermine sa durée de vie restante, c'est-à-dire le temps qui lui reste pour être délivré à l'utilisateur destinataire.

En pratique, un paquet à destination d' un utilisateur sera considéré comme urgent si sa durée de vie restante (*Remaining Time To Live*), $R_{TTL}$ vérifie :

$$R_{TTL} \leq Th_{rush}.\tau_{TTL} - \eta \qquad (4)$$

où $\tau_{TTL}$ est un temps élémentaire, $Th_{rush}$ est une valeur de seuil et $\eta$ est une constante positive prédéterminée, prenant en compte la durée de l'intervalle de transmission TTI et le nombre maximum de retransmissions éventuelles du paquet, dans le cas où un protocole de retransmission de paquet de type HARQ (*Hybrid Automatic Repeat reQuest*) est utilisé sur la liaison. On rappelle qu'un paquet appartenant à un flux RT se voit octroyer une durée de vie ou TTL (*Time to Live),* correspondant au maximum de latence admissible. Autrement dit un paquet transmis avec une durée de vie TTL donnée doit être délivré au destinataire dans le temps TTL.

Plus précisément, la relation (4) signifie que si la durée de vie restante du paquet est inférieure à une valeur de seuil prédéterminée (qui peut d'ailleurs dépendre de la qualité de service requise), le paquet est classé comme urgent et est par conséquent traité en priorité par la méthode d'ordonnancement. Comme indiqué plus haut, lorsqu'un protocole HARQ est utilisé sur la liaison, une marge temporelle ($\eta$) est avantageusement prévue pour tenir du retard introduit par des retransmissions éventuelles lorsque le paquet reçu est erroné.

*A contrario,* les paquets appartenant aux flux RT ne vérifiant pas la relation (4) sont déclarés comme non urgents.

On considère désormais les paquets appartenant aux flux NRT. Le paquet d' un flux NRT sera déclaré comme urgent si l'utilisateur destinataire de ce flux n'a été jusqu'à présent servi qu'en deçà de ce qui était requis par sa qualité de service (QoS). Plus précisément, si l'on note $QoS_i$ la qualité de service requise pour le flux $i$, un paquet de ce flux sera considéré comme urgent au temps $t_i$ si :

$$(TW_i - t_i) \leq (QoS_i - q_i)/R_{min} \qquad (5)$$

où $TW_i$ est la durée d'une fenêtre d' observation, sensiblement supérieure à la durée d'un intervalle de transmission TTI, $t_i$ est le temps écoulé depuis le début de cette fenêtre d'observation, $QoS_i$ est la qualité de service libellée en quantité de données à acheminer pendant ladite fenêtre d'observation, $q_i$ est la quantité de données effectivement transmises depuis le début de cette fenêtre, et $R_{min}$ est le débit minimum sur la liaison.

La relation (5) signifie que si la quantité de données restant à transmettre sur la liaison jusqu'à la fin de la fenêtre d'observation est supérieure à celle qu'il est possible de transmettre avec le débit minimum pendant ce même laps de temps, l'utilisateur destinataire de ce flux n'a pas été servi comme requis par la qualité de service spécifiée et les paquets de ce flux restant à transmettre sont considérés comme urgents.

On notera dans la suite $\Omega_{rush}$ l'ensemble des paquets urgents pour l'intervalle de transmission considéré et $\Omega_{non\text{-}rush}$ l'ensemble des paquets non urgents.

Dans une seconde étape, 120, la méthode d'ordonnancement attribue aux paquets urgents les meilleures ressources de transmission en termes qualité de liaison, par exemple en termes de rapport signal sur bruit. Selon un exemple de réalisation, l'ordonnancement est réalisé selon une méthode de type EDF (*Earliest Deadline First*).

Plus précisément les paquets de $\Omega_{rush}$ sont classés en fonction de leurs degrés d'urgence.

De manière générale, on considèrera d'abord que les paquets de $\Omega_{rush}$ appartenant à des flux RT sont plus urgents que ceux de $\Omega_{rush}$ appartenant à des flux NRT.

Les paquets des flux RT sont avantageusement classés en fonction de leurs durées de vie restantes.

Ainsi un paquet de durée de vie restante, $R_{TTL}^1$, sera considéré comme plus urgent qu'un paquet de durée de vie restante $R_{TTL}^2$ si et seulement si :

$$R_{TTL}^1 < R_{TTL}^2 \qquad\qquad (6)$$

Les paquets de $\Omega_{rush}$ relatifs à des flux NRT seront avantageusement classés en fonction des déficits de service de ces flux, un paquet d'un flux de plus fort déficit (en valeur absolue) étant considéré comme plus urgent qu'un paquet d'un flux de moindre déficit.

Par exemple, le déficit de service $D_i$ d'un flux $i$ pourra être estimé par :

$$D_i = q_i - QoS_i \cdot \frac{t_i}{TW_i} \qquad\qquad (7)$$

Après avoir été classés selon leur degré d'urgence, les paquets les plus urgents se voient attribuer les ressources de transmission offrant la meilleure qualité de liaison.

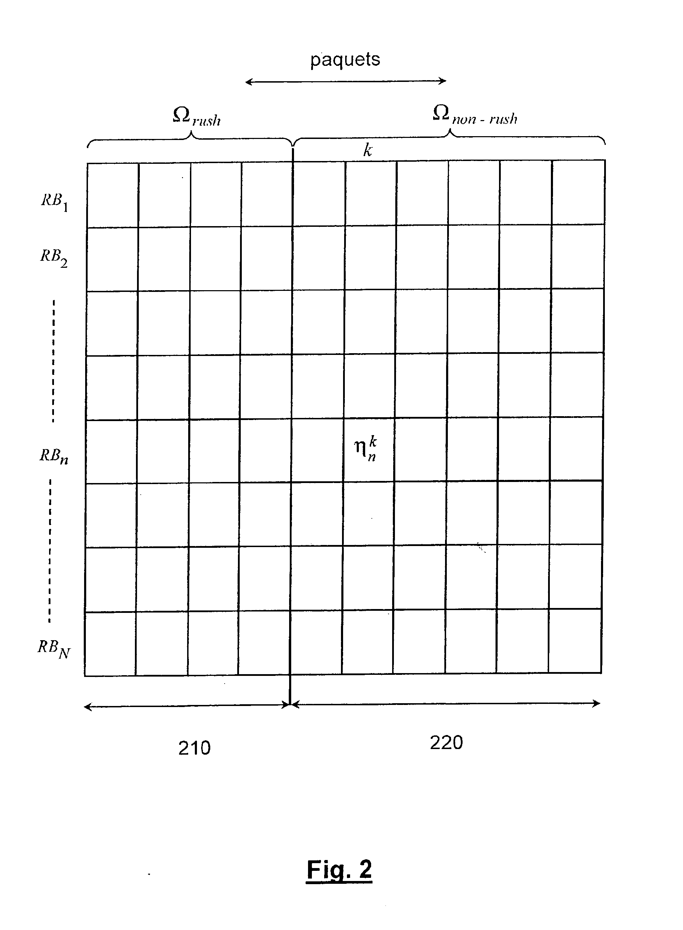

On a représenté en Fig. 2, une matrice dont les lignes correspondent aux différentes ressources de transmission $RB_1,...,RB_N$ et les colonnes aux différents paquets à transmettre. Chaque paquet appartient à un flux à destination d'un utilisateur $k$. On a distingué, en 210, les paquets urgents et, en 220, les paquets non urgents. Les paquets urgents sont classés par ordre d'urgence croissante de la droite vers la gauche. Les paquets non urgents ne sont pas classés.

Pour un paquet à transmettre à un utilisateur $k$, et pour chaque ressource de transmission possible $n$, on note $\eta_n^k$ la qualité de la liaison descendante vers $k$ si elle utilise la ressource $n$. Cette qualité de liaison peut être exprimée par exemple sous forme de rapport signal à bruit. La qualité de liaison peut être déterminée à partir d'une information de qualité de canal ou CQI (*Channel Quality Indicator*) renvoyée par l'utilisateur à la station de base.

Lors de la procédure d'attribution de l'étape 120, on balaie les colonnes de la gauche vers la droite et l'on choisit pour chaque colonne (c'est-à-dire pour chaque paquet), la ressource de transmission disponible correspondant à la qualité de liaison la plus élevée.

Lorsque l'ensemble des paquets urgents a été traité, on passe à l'étape 130.

A l'étape 130, les paquets déclarés comme non urgents se voient attribuer des ressources parmi celles non déjà attribuées à l'étape précédente.

Pour chaque ressource disponible, c'est-à-dire pour chaque ressource non déjà allouée à l'étape précédente, on détermine le paquet pour lequel la qualité de la liaison utilisant cette ressource est la plus élevée. On attribue alors à ce paquet la ressource permettant d'obtenir la qualité de liaison maximale. Le choix de la meilleure qualité de liaison permet d'obtenir la meilleure efficacité spectrale et, par conséquent, du plus fort débit.

La qualité de liaison peut être mesurée en termes de rapport signal sur bruit, ou bien directement en termes de débit maximal sur la liaison.

On comprendra que l'ordonnancement des paquets non urgents est par conséquent réalisé selon une méthode de type MCI.

Si plusieurs paquets permettent d'obtenir la qualité de liaison maximale (par exemple si un utilisateur reçoit plusieurs flux), l'un de ces paquets seulement se voit attribuer la ressource en question. La ressource attribuée est déclarée indisponible et le procédé d'attribution se poursuit avec une autre ressource.

A l'étape 140, on considère exclusivement les paquets non urgents ($\Omega_{non\ rush}$).

Pour chaque paquet, on détermine le schéma de modulation et de codage ou MCS (*Modulation and Coding Scheme*) permettant d'obtenir la meilleure efficacité spectrale sur la liaison (utilisant la ressource allouée à l'étape précédente), compte tenu du taux d'erreur paquet $PER_{target}$ imposé par la qualité de service.

Par schéma de modulation et de codage on entend conventionnellement un couple comprenant, d'une part, une constellation de modulation et, d'autre part, un code de correction d'erreurs. L d'un schéma MCS pour une liaison donnée est encore dénommé adaptation de liaison. A chaque schéma MCS correspond une efficacité spectrale λ.

Le tableau suivant donne un liste de schémas MCS possibles et, pour chaque schéma MCS, la constellation de modulation associée, le débit du code de correction d'erreur associé, et l'efficacité spectrale correspondante.

| Schéma MCS | Modulation | Débit du code | Efficacité spectrale |
|---|---|---|---|
| 1 | QPSK | 1/3 | 2/3 |
| 2 | QPSK | 1/2 | 1 |
| 3 | QPSK | 2/3 | 4/3 |
| 4 | 16-QAM | 1/3 | 4/3 |
| 5 | QPSK | 3/4 | 3/2 |
| 6 | 16-QAM | 1/2 | 2 |
| 7 | 64-QAM | 1/3 | 2 |
| 8 | 16-QAM | 2/3 | 8/3 |
| 9 | 16-QAM | 3/4 | 3 |
| 10 | 64-QAM | 1/2 | 3 |
| 11 | 64-QAM | 2/3 | 4 |
| 12 | 64-QAM | 3/4 | 9/2 |

Pour chaque paquet $k$ et chaque ressource allouée $n$, on note $MCS_{k,n}^{\max}$ le schéma de modulation et de codage permettant d'obtenir l'efficacité spectrale maximale sur la liaison, notée $\lambda_{k,n}^{\max}$, compte tenu du taux d'erreur paquet ($PER_{target}$) correspondant à la qualité de service requise ($QoS_k$).

Soit $MCS_{low-power}$ un schéma de modulation et de codage prédéterminé, robuste, autrement dit ayant une faible efficacité spectrale $\lambda_{low-power}$.

Le schéma $MCS_{low-power}$ est un paramètre de la méthode d'ordonnancement. Selon un exemple de réalisation, le schéma $MCS_{low-power}$ est sélectionné de manière adaptative parmi une pluralité de schémas MCS en fonction de la charge de la cellule : l'efficacité spectrale du schéma $MCS_{low-power}$ est choisie d'autant plus faible que la charge de la cellule est plus élevée.

our chaque paquet $k$, si $\lambda_{k,n}^{\max} > \lambda_{low-power}$, on affecte à la liaison le schéma $MCS_{low-power}$ en lieu et place du schéma optimal $MCS_{k,n}^{\max}$. Pour un taux d'erreur paquet cible $PER_{target}$ donné, le choix d'un schéma de modulation et de codage robuste $MCS_{low-power}$ permet d'opérer à rapport signal sur bruit plus faible.

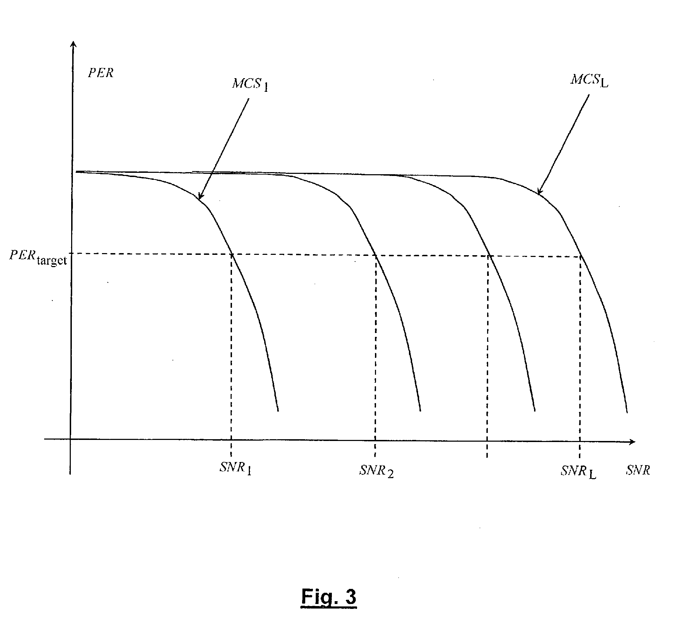

On a représenté en Fig. 3 les courbes de taux d'erreur paquet en fonction du rapport signal sur bruit, pour différents schémas de modulation et de codage $MCS_1, MCS_2,..., MCS_L$ d' efficacités spectrales croissantes.

On voit qu'un même taux d'erreur paquet donné $PER_{target}$ peut être atteint, avec un schéma MCS d'efficacité spectrale élevée, pour un plus fort rapport signal sur bruit et, avec un schéma MCS de moindre efficacité spectrale, pour un rapport signal sur bruit plus faible.

Le choix d'un schéma $MCS_{low-power}$ à faible efficacité spectrale permet donc d'opérer à plus faible rapport signal sur bruit pour les paquets non urgents et, par conséquent, de réduire avantageusement la puissance d'émission utilisée.

Toutefois, la baisse de la puissance d'émission des paquets non urgents n'affecte pas les paquets urgents et leur caractère prioritaire. Le cas échéant, on pourra toutefois procéder si nécessaire à une réduction de puissance d'émission des paquets urgents pour réduire encore davantage l'énergie nécessaire à la transmission de l'ensemble des paquets.

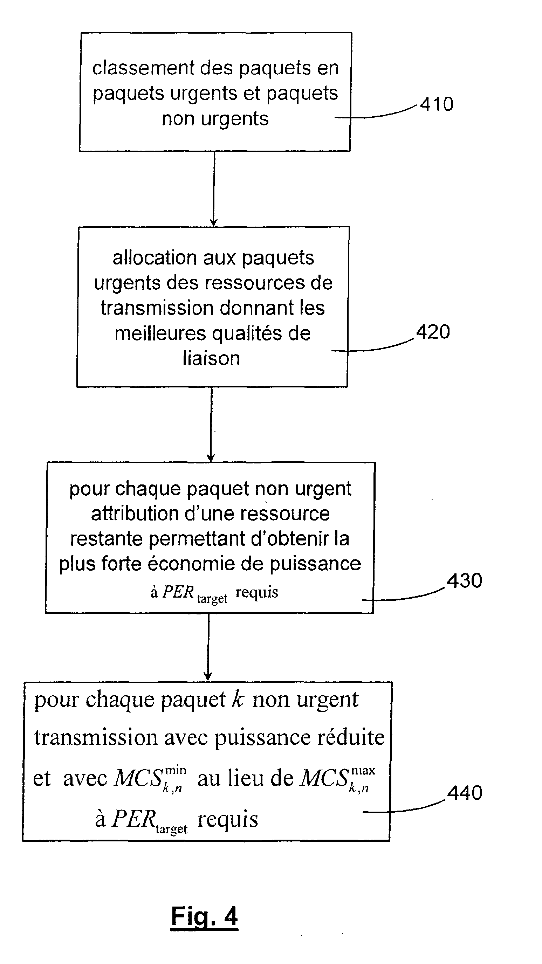

La Fig. 4 représente un deuxième mode de réalisation de l'invention.

Les étapes 410 et 420 sont respectivement identiques aux étapes 110 et 120 du premier mode de réalisation.

A l'étape 430, on procède à l'allocation de ressources pour les paquets non urgents. Pour ce faire, on détermine, pour chacune des ressources encore disponibles, le paquet permettant de réaliser la plus forte économie de puissance de transmission tout en respectant la qualité de service, autrement dit de maximiser

$$\left| SINR_{k,n}(MCS_{k,n}^{\max}) - SINR_{k,n}\left(MCS_{k,n}^{\min}\right) \right|, \quad \text{le schéma } MCS_{k,n}^{\max} \text{ étant comme précédemment le schéma de}$$

plus forte efficacité spectrale, et $MCS_{k,n}^{\min}$ le schéma de plus faible efficacité spectrale permettant d'assurer la qualité de service sur la liaison (taux d'erreur paquet $PER_{\text{target}}$).

Le paquet réalisant la plus forte économie de puissance se voit alors affecter la ressource en question.

A l'étape 440, on considère à nouveau exclusivement les paquets non urgents. Chaque paquet $k$ est alors transmis avec le schéma $MCS_{k,n}^{\min}$ avec une puissance réduite correspondant au rapport signal sur bruit

$$SINR_{k,n}\left(MCS_{k,n}^{\min}\right).$$

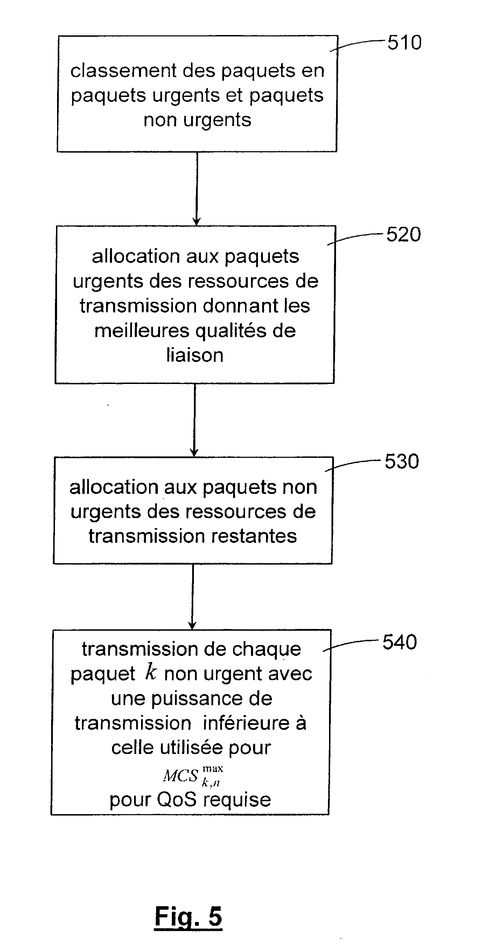

On a représenté en Fig. 5, une méthode d'ordonnancement selon un mode plus général de réalisation de l'invention.

A l'étape 510, on classe les paquets des différents utilisateurs entre paquets urgents et paquets non urgents.

A l'étape 520, on attribue aux paquets urgents les ressources de transmission permettant d'obtenir les meilleures qualités de liaison en donnant la préférence aux paquets les plus urgents.

A l'étape 530, on attribue aux paquets non urgents les ressources restantes, c'est-à-dire non attribuées à l'étape 520.

A l'étape 540, on transmet chaque paquet non-urgent avec une puissance de transmission inférieure à celle qui serait nécessaire pour le transmettre avec une efficacité spectrale maximale, compte tenu de la qualité de service requise sur la liaison de l'utilisateur, c' est-à-dire du taux d'erreur paquet cible ($PER_{\text{target}}$).

L'homme du métier comprendra que la méthode d'ordonnancement représentée en Fig. 5 est une généralisation de celles représentées en Figs. 1 et 4.

## Revendications

**1.** Méthode d'ordonnancement dans un système de communication multi-utilisateur, ladite méthode attribuant à chaque paquet d' un utilisateur une ressource de transmission parmi une pluralité de ressources de transmission pendant un intervalle de temps de transmission, **caractérisée en ce que** :

(a) on classe (510) les paquets des différents utilisateurs entre paquets urgents et paquets non urgents ;
(b) on attribue (520) aux paquets urgents les ressources de transmission permettant d'obtenir les meilleures qualités de liaison en donnant la préférence aux paquets les plus urgents ;
(c) on attribue (530) aux paquets non urgents les ressources restantes ;
(d) on transmet (540) chaque paquet non-urgent au moyen de la ressource ainsi attribuée et avec une puissance de transmission inférieure à celle qui serait nécessaire pour le transmettre avec une efficacité spectrale maximale, compte tenu de la qualité de service requise sur la liaison.

**2.** Méthode d'ordonnancement selon la revendication 1, **caractérisée en ce qu'** à l'étape (b) on attribue aux paquets urgents les ressources de transmission offrant les qualités de liaison les plus élevées, un paquet se voyant attribuer une ressource de transmission offrant une qualité de liaison d'autant plus élevée qu'il est urgent.

**3.** Méthode d'ordonnancement selon la revendication 1 ou 2, **caractérisée en ce qu'** à l'étape (c), on attribue à chaque paquet non urgent la ressource de transmission restante permettant d'obtenir la qualité de liaison la plus élevée.

4. Méthode d'ordonnancement selon la revendication 3, **caractérisée en ce que**, pour chaque paquet non urgent, on détermine le schéma de modulation et de codage $(MCS_{n,k}^{\max})$ de plus grande efficacité spectrale $(\lambda_{n,k}^{\max})$ et la puissance d'émission $(P_{n,k}^{\max})$ permettant d'obtenir une qualité de service requise $(QoS_k)$ sur la liaison utilisant la ressource de transmission $(RB_n)$ attribuée au paquet, on vérifie si cette efficacité spectrale $(\lambda_{n,k}^{\max})$ est supérieure à celle $(\lambda_{low\text{-}power})$ d'un schéma de modulation et de codage robuste prédéterminé et, dans l'affirmative, on utilise à l'étape (d) ce schéma pour transmettre ledit paquet non urgent avec une puissance d'émission inférieure à celle précédemment déterminée.

5. Méthode d'ordonnancement selon l'une des revendications précédentes, **caractérisée en ce que**, si un paquet appartient à un flux de type temps réel, il est classé comme urgent si sa durée de vie restante est inférieure à un seuil prédéterminé et comme non urgent dans le cas contraire.

6. Méthode d'ordonnancement selon l'une des revendications précédentes, **caractérisée en ce que**, le système étant de type HARQ, si un paquet appartient à un flux de type temps réel, il est classé comme urgent si sa durée de vie restante est inférieure à un seuil prédéterminé diminué d'une marge temporelle fonction du nombre maximum de retransmissions du paquet et comme non urgent dans le cas contraire.

7. Méthode d'ordonnancement selon la revendication 5 ou 6, **caractérisée en ce que** le seuil est déterminé par la procédure d'admission des utilisateurs dans ledit système.

8. Méthode d'ordonnancement selon l'une des revendications précédentes, **caractérisée en ce que**, si un paquet appartient à un flux de type non temps réel, il est classé comme urgent si le flux auquel il appartient n'a pas été servi jusqu'alors à la hauteur de la qualité de service requise par ce flux.

9. Méthode d'ordonnancement selon la revendication 8, **caractérisée en ce qu'**un paquet $k$ appartenant à un flux $i$ est considéré comme urgent au temps $t_i$ si $(TW_i\text{-}t_i) \leq (QoS_i\text{-}q_i)/R_{min}$ où $TW_i$ est la durée d'une fenêtre d'observation, $t_i$ est le temps écoulé depuis le début de cette fenêtre, $QoS_i$ est la qualité de service requise par le flux $i$, libellée en termes de quantité de données à transmettre pendant ladite fenêtre d'observation, $q_i$ est la quantité de données effectivement transmises depuis le début de la fenêtre d'observation et $R_{min}$ est le débit minimum sur la liaison.

10. Méthode d'ordonnancement selon la revendication 1 ou 2, **caractérisée en ce qu'**à l'étape (c) :

   - on attribue une ressource de transmission restante au paquet pour lequel il est possible d'obtenir une économie maximale de puissance, à la qualité de service requise, entre un premier schéma de modulation et de codage et un second schéma de modulation et de codage, ledit premier schéma $(MCS_{k,n}^{\max})$ présentant une efficacité spectrale maximale parmi une pluralité de schémas possibles, ledit second schéma $(MCS_{k,n}^{\min})$ présentant une efficacité spectrale minimale parmi la même pluralité ;
   - on utilise le second schéma pour transmettre ledit paquet avec une puissance réduite permettant d'obtenir ladite qualité de service requise.

**Claims**

1. A scheduling method in a multi-user communication system, said method assigning to each packet of a user a transmission resource from a plurality of transmission resources during a transmission time interval, **characterised by**:

   (a) categorising (510) the packets from different users into urgent packets and non-urgent packets;
   (b) assigning (520) to urgent packets the transmission resources for obtaining the best link qualities by giving preference to the most urgent packets;

(c) assigning (530) to non-urgent packets the remaining resources;

(d) transmitting (540) each non-urgent packet using the thus assigned resource and with a transmission power lower than that which would be necessary to transmit it with a maximum spectral efficiency, in view of the quality of service required on the link.

2. The scheduling method according to claim 1, **characterised by**, in step (b) assigning to urgent packets the transmission resources providing the highest link qualities, a packet being assigned a transmission resource providing a link quality as high as such packet is urgent.

3. The scheduling method according to claim 1 or 2, **characterised by**, in step (c) assigning to each non-urgent packet the remaining transmission resource for obtaining the highest link quality.

4. The scheduling method according to claim 3, **characterised by**, for each non-urgent packet, determining the modulation and coding scheme $(MCS_{n,k}^{\max})$ with a greater spectral efficiency $(\lambda_{n,k}^{\max})$ and the emission power $(P_{n,k}^{\max})$ for obtaining a quality of service $(QoS_k)$ required on the link using the transmission resource $(RB_n)$ assigned to the packet, checking whether this spectral efficiency $(\lambda_{n,k}^{\max})$ is higher than that $(\lambda_{low\text{-}power})$ of a predetermined robust modulation and coding scheme and, if so, using in step (d) this scheme for transmitting said non-urgent packet with an emission power lower than that previously determined.

5. The scheduling method according to one of the preceding claims, **characterised in that**, if a packet belongs to a flow of the real time type, it is categorised as urgent if its remaining lifetime is lower than a predetermined threshold and as non-urgent in the opposite case.

6. The scheduling method according to one of the preceding claims, **characterised in that**, the system being of the HARQ type, if a packet belongs to a flow of the real time type, it is categorised as urgent if its remaining lifetime is lower than a predetermined threshold minus a time margin depending on the maximum number of retransmissions of the packet and as non-urgent in the opposite case.

7. The scheduling method according to claim 5 or 6, **characterised in that** the threshold is determined by the procedure for allowing users into said system.

8. The scheduling method according to one of the preceding claims, **characterised in that**, if a packet belongs to a flow of the non real time type, it is categorised as urgent if the flow to which it belongs has not been served until then at the quality of service required for this flow.

9. The scheduling method according to claim 8, **characterised in that** a packet $k$ belonging to a flow $i$ is considered as urgent at the time $t_i$ if $(TW_i - t_i) \le (QoS_i - q_i)/R_{min}$ where $TW_i$ is the duration of an observation window, $t_i$ is the time elapsed since the beginning of this window, $QoS_i$ is the quality of service required for the flow $i$, expressed as the amount of data to be transmitted during said observation window, $q_i$ is the amount of data actually transmitted since the beginning of the observation window and $R_{min}$ is the minimum rate on the link.

10. The scheduling method according to claim 1 or 2, **characterised by**, in step (c):

- assigning a remaining transmission resource to a packet for which maximum power savings may be obtained, at the required quality of service, between a first modulation and coding scheme and a second modulation and coding scheme, said first scheme $(MCS_{k,n}^{\max})$ having a maximum spectral efficiency from a plurality of possible schemes, said second scheme $(MCS_{k,n}^{\min})$ having a minimum spectral efficiency from the same plurality;

- using the second scheme for transmitting said packet with a lowered power for obtaining said required quality of service.

**Patentansprüche**

1. Zuteilungsverfahren in einem Kommunikationssystem mit mehreren Benutzern, wobei das Verfahren jedem Paket eines Benutzers aus einer Mehrzahl von Übertragungsressourcen während eines Übertragungszeitintervalls eine Übertragungsressource zuweist, **dadurch gekennzeichnet, dass**:

   (a) man die Pakete der verschiedenen Benutzer in eilige Pakete und uneilige Pakete klassifiziert (510);
   (b) man den eiligen Paketen die Übertragungsressourcen zuweist (520), die die Erzielung der besten Verbindungsqualitäten erlauben, wobei man den eiligsten Paketen die Präferenz gibt;
   (c) man den uneiligen Paketen die verbleibenden Ressourcen zuweist (530);
   (d) man jedes uneilige Paket mittels der derart zugewiesenen Ressource und mit einer Übertragungsleistung überträgt (540), die kleiner ist als jene, die erforderlich wäre, um es mit einer maximalen spektralen Effizienz zu übertragen, wobei die auf der Verbindung benötigte Dienstqualität berücksichtigt wird.

2. Zuteilungsverfahren nach Anspruch 1, **dadurch gekennzeichnet, dass** man im Schritt (b) den eiligen Paketen die Übertragungsressourcen zuweist, die die höchsten Verbindungsqualitäten bieten, wobei einem Paket eine Übertragungsressource zugewiesen wird, die eine umso höhere Verbindungsqualität bietet, je eiliger es ist.

3. Zuteilungsverfahren nach Anspruch 1 oder 2, **dadurch gekennzeichnet, dass** man im Schritt (c) jedem uneiligen Paket die verbleibende Übertragungsressource zuweist, die die Erzielung der höchsten Verbindungsqualität erlaubt.

4. Zuteilungsverfahren nach Anspruch 3, **dadurch gekennzeichnet, dass** man für jedes uneilige Paket das Modulations- und Codierschema $\left( MCS_{n,k}^{\max} \right)$ mit der größten spektralen Effizienz $\left( \lambda_{n,k}^{\max} \right)$ sowie die Sendeleistung $\left( P_{n,k}^{\max} \right)$ bestimmt, die die Erzielung einer benötigten Dienstqualität ($QoS_k$) auf der Verbindung erlaubt, die die dem Paket zugewiesene Übertragungsressource ($RB_n$) verwendet, man ferner überprüft, ob diese spektrale Effizienz $\left( \lambda_{n,k}^{\max} \right)$ größer ist als jene ($\lambda_{low\text{-}power}$) eines vorbestimmten robusten Modulations- und Codierschemas, und man bejahenden falls im Schritt (d) dieses Schema verwendet, um das uneilige Paket mit einer Sendeleistung zu übertragen, die kleiner ist als die vorher Bestimmte.

5. Zuteilungsverfahren nach einem der vorhergehenden Ansprüche, **dadurch gekennzeichnet, dass** dann, wenn ein Paket zu einem Strom vom Echtzeittyp gehört, es als eilig klassifiziert wird, wenn seine verbleibende Lebensdauer kleiner als eine vorbestimmte Schwelle ist, und andernfalls als uneilig.

6. Zuteilungsverfahren nach einem der vorhergehenden Ansprüche, **dadurch gekennzeichnet, dass** das System vom Typ HARQ ist, und dass dann, wenn ein Paket zu einem Strom vom Echtzeittyp gehört, es als eilig klassifiziert wird, wenn seine verbleibende Lebensdauer kleiner ist als eine vorbestimmte Schwelle, welche verringert ist um eine zeitliche Marge als Funktion der maximalen Zahl von erneuten Übertragungen des Pakets, und andernfalls als uneilig.

7. Zuteilungsverfahren nach Anspruch 5 oder 6, **dadurch gekennzeichnet, dass** die Schwelle bestimmt wird durch das Verfahren zur Zulassung der Benutzer zu dem System.

8. Zuteilungsverfahren nach einem der vorhergehenden Ansprüche, **dadurch gekennzeichnet, dass** dann, wenn ein Paket zu einem Strom vom Typ Nicht-Echtzeit gehört, es als eilig klassifiziert wird, wenn der Strom, zu dem es gehört, bis dahin nicht mit der für diesen Strom benötigten Dienstqualitätshöhe verwendet wurde.

9. Zuteilungsverfahren nach Anspruch 8, **dadurch gekennzeichnet, dass** ein Paket $k$, welches zu einem Strom $i$ gehört, zur Zeit $t_i$ als eilig angesehen wird, wenn $(TW_i - t_i) \leq (QoS; - q_i)/R_{\min}$, wobei $TW_i$ die Dauer eines Beobachtungsfensters ist, $t_i$ die seit dem Beginn dieses Fensters verstrichene Zeit ist, $QoS_i$ die durch den Strom $i$ benötigte Dienstqualität ist, ausgedrückt als Datenmenge, die während des Beobachtungsfenster zu übertragen ist, $q_i$ die effektiv seit dem Beginn des Beobachtungsfensters übertragene Datenmenge ist, und $R_{\min}$ die minimale Rate auf der Verbindung ist.

10. Zuteilungsverfahren nach Anspruch 1 oder 2, **dadurch gekennzeichnet, dass** man im Schritt (c):

- eine verbleibende Übertragungsressource dem Paket zuweist, für welches es möglich ist, eine maximale Leistungseinsparung bei der benötigten Dienstqualität zwischen einem ersten Modulations- und Codierschema und einem zweiten Modulations- und Codierschema zu erzielen, wobei das erste Schema $MCS_{k,n}^{\max}$ eine maximale spektrale Effizienz aus einer Mehrzahl von möglichen Schemata aufweist, wobei das zweite Schema $\left( MCS_{k,n}^{\min} \right)$ eine minimale spektrale Effizienz aus der gleichen Mehrzahl aufweist;

- das zweite Schema verwendet, um das Paket mit einer verringerten Leistung zu übertragen, die die Erzielung der benötigten Dienstqualität erlaubt.

classement des paquets en paquets urgents et paquets non urgents ——110

allocation aux paquets urgents des ressources de transmission donnant les meilleures qualités de liaison ——120

pour chaque paquet non urgent attribution d'une ressource restante permettant d'obtenir le meilleur SNR ——130

pour chaque paquet $k$ non urgent

tel que $\lambda^{\max}_{k,n} > \lambda_{low-power}$

transmission à puissance $P_{low}$

avec $MCS_{low-power}$ au lieu de $MCS^{\max}_{k,n}$

à $PER_{target}$ requis ——140

**Fig. 1**

**Fig. 2**

**Fig. 3**

classement des paquets en
paquets urgents et paquets
non urgents

— 410

allocation aux paquets
urgents des ressources de
transmission donnant les
meilleures qualités de
liaison

— 420

pour chaque paquet non urgent
attribution d'une ressource
restante permettant d'obtenir la
plus forte économie de puissance
à $PER_{target}$ requis

— 430

pour chaque paquet $k$ non urgent
transmission avec puissance réduite
et avec $MCS_{k,n}^{min}$ au lieu de $MCS_{k,n}^{max}$
à $PER_{target}$ requis

— 440

**Fig. 4**

```
┌─────────────────────────┐
│  classement des paquets en │─── 510
│  paquets urgents et paquets │
│      non urgents          │
└─────────────────────────┘
            │
            ▼
┌─────────────────────────┐
│  allocation aux paquets    │─── 520
│  urgents des ressources de │
│  transmission donnant les  │
│  meilleures qualités de    │
│        liaison            │
└─────────────────────────┘
            │
            ▼
┌─────────────────────────┐
│  allocation aux paquets non │─── 530
│  urgents des ressources de │
│  transmission restantes    │
└─────────────────────────┘
            │
            ▼
┌─────────────────────────┐
│  transmission de chaque     │─── 540
│  paquet $k$ non urgent avec │
│  une puissance de          │
│  transmission inférieure à │
│  celle utilisée pour       │
│       $MCS_{k,n}^{max}$     │
│    pour QoS requise        │
└─────────────────────────┘
```

## Fig. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2148478 A

**Littérature non-brevet citée dans la description**

- **A. POKHARIYAL et al.** Performance of downlink frequency domain packet scheduling for the UTRAN long term évolution. *Proc. of IEEE International Symposium on PIRMC,* Septembre 2006

- **M. ANDREWS et al.** Providing quality of service over a shared wireless link. *IEEE Communications Magazine,* Février 2001, 150-154
- **G. MIAO et al.** Energy efficient design in Wireless OFDMA. *Proc. IEEE 2008 International Conference on Comm.,* Mai 2008